(19) Europäisches Patentamt

European Patent Office

Office européen des brevets

(11) **EP 2 552 173 A1**

## (12) EUROPEAN PATENT APPLICATION

(43) Date of publication:
**30.01.2013 Bulletin 2013/05**

(51) Int Cl.:
**H04W 88/08** *(2009.01)*    *H04W 16/24* *(2009.01)*

(21) Application number: **11176063.3**

(22) Date of filing: **29.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Vodafone Holding GmbH**
**40213 Düsseldorf (DE)**

(72) Inventors:
• **Riedel, Ines**
  **01309 Dresden (DE)**

• **Irmer, Ralf**
  **Newbury RG141RJ (GB)**
• **Fettweis, Gerhard**
  **01326 Dresden (DE)**
• **Lu, Zhanhong**
  **Newbury Berkshire RG142PX (GB)**
• **Bhat, Prakash**
  **Reading, Berkshire RG64HE (GB)**

(74) Representative: **Taruttis, Tilman**
**Bosch Jehle**
**Patentanwaltsgesellschaft mbH**
**Flüggenstraße 13**
**80639 München (DE)**

(54) **Mobile communication method und system comprising network and antenna sharing and hierarchical sectorization**

(57)    In a cellular communication system a first and a second set of antennas are arranged at an antenna site. First and second baseband processing blocks are coupled to the antennas of the first and second antennas respectively. To improve the connection to a terminal an antenna of the second set is coupled to the first baseband processing block in addition to the antennas of the first set. Communication with the terminal is performed via at least one antenna of the first and at least one antenna of the second set. The first and second set of antennas can belong to two different network operators. By applying this invention, the two network operators can share the antenna pool of the first and second set of antennas even if the antennas are the existing ones at the same top-roof or tower.

Fig. 2

**Description**

The invention relates to a mobile communication system, particularly to a cellular mobile communication system comprising at least one antenna site and a method for operating the antennas.

Traditional mobile communication systems typically are organized as a cellular network. The area covered by the cellular communication system is divided into a plurality of cells, wherein the area covered by a cell is defined by the radio range and directivity of the antennas associated with that cell. Antennas as used in cellular communication systems are not necessarily omnidirectional. Thus, the area around an antenna site is typically covered by a plurality of directional antennas pointing in different directions. The geographical area covered by at least one antenna pointing in a specific direction is called a sector. Each of these sectors is served by a base station or eNodeB, that processes the signals received by and transmitted via antennas. Typically, each antenna site serves three or six sectors. By adjusting the directivity of the antennas, the downtilt of the antennas and the controlling of the emitted energy, the area covered by each sector can be defined. Accordingly, the term cell here denotes the total area covered by the plurality of sectors associated with an antenna site. Since the field intensity decreases with increasing radial and angular distance from an antenna, a terminal will experience a weak signal at the edge of a sector. In case an adjacent sector is operated at the same frequency, the signal received at a sector edge may additionally comprise interference from that adjacent sector, since adjacent sectors typically overlap. To mitigate this so-called inter-sector interference, orthogonal resources can be used in adjacent sectors, i.e. adjacent sectors may use different frequency bands. However, using different frequencies in adjacent sectors is inefficient. Considering that in near future times the data volume to be transmitted will further increase and that the range of available frequencies are limited, an inefficient use of frequencies will be costly and should be avoided.

In conventional systems the problem of inter-sector interference occurs whenever adjacent sectors deploy non-orthogonal resources, for example when using the same frequency at the same time.

A conventional approach to increase the throughput of a sectorized antenna site is to increase the extent of sectorization, i.e. to increase the number of installed antennas, each antenna serving a smaller area. However, to enable conventional transmission sectors are designed such that the required coverage is ensured. Furthermore, the overlap of these sectors is designed high enough to enable seamless handovers and at the same time as low as possible to reduce the inter-sector interference. Thus, when increasing the extent of sectorization, not only the number of required antennas (and base stations) is increased, but also antennas with completely different antenna patterns are necessary.

Another approach to increase the throughput when deploying non-orthogonal resources is the application of coordinated multipoint techniques, i.e. so-called CoMP (coordinated multipoint transmission/reception) techniques. Although there are different types of CoMP, the basic idea is that base stations located at distant antenna sites exchange information about received and transmitted radio signals as well as channel conditions and thus are enabled to consider the signals of their respective adjacent sectors. For example when considering the downlink, the signal may be transmitted from more than one base station to a terminal and these transmissions may be coordinated such that they superimpose advantageously at the terminal. Especially a terminal located at a sector edge may accordingly benefit from these superimposed signals originating from different base stations. Similarly, in the uplink the system can take advantage from the reception of the signal at different base stations, if the reception and processing at the base stations is coordinated. At least one drawback of such base station cooperation schemes is the requirement for a fast backhaul link between base stations located at distant antenna sites for exchanging the information.

In intra-site CoMP, i.e. when the coordinated base stations serve adjacent sectors whose antennas are located at the same site, the exchange of information between the entities processing the antenna signals is not constrained by a backhaul link, since distances between the processing entities are considered short and negligible.

Publication "Creating Desirable Interference by Optimized Sectorization in Cellular Systems", by I. Riedel et al. published in December 2010, analyzes the throughput of sectorized cellular communication systems, wherein also cooperative transmission schemes are considered. Cooperative transmission schemes using higher extents of sectorization and a corresponding large number of antennas with low directivity are considered to be attractive.

However, existing antenna sites typically exhibit three-fold sectorization with directed antennas. As a consequence for implementing a new non-coordinated multi-sector scheme at an already existing conventional antenna site, the installed antennas are useless and must be replaced. Hence there is a need for an alternative to efficiently using resources. This problem is solved by the device and method as claimed in the independent claims.

Brief description of the figures

Fig. 1          depicts a schematic of an antenna site comprising a first and a second set of antennas;

Fig. 2          depicts a schematic of an antenna site comprising a first and a second set of installed antennas;

Figs. 3a, 3b depict basic baseband processing chains at a transmitter and a receiver.

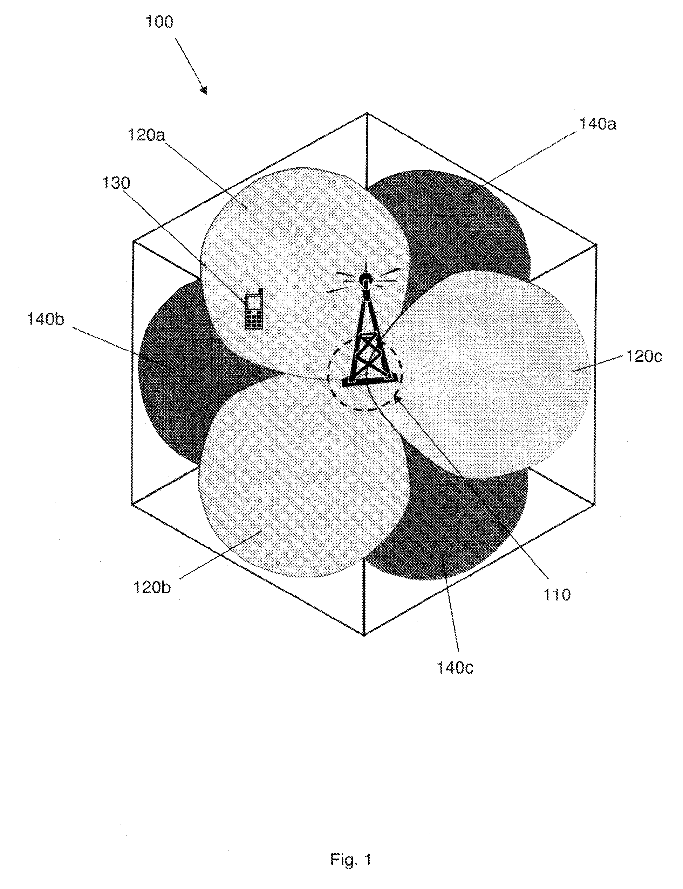

Figure 1 depicts a schematic of one communication cell 100 of a cellular communication system. The communication system may comprise a plurality of communication cells arranged to cover an area being a multiple of the depicted one cell.

The cell area comprises an antenna site 110, at which a first set and a second set of antennas are arranged. Note that in one embodiment the antenna site may be located in or near the geographical centre of cell 100. That configuration is typical for threefold-sectorization. However, central location of the antenna site is not a necessity. Depending on the antenna configuration, i.e. depending on the antenna pattern, the emitted energy of an antenna and the downtilt, the antenna site may be located somewhere else in the cell. Accordingly the invention may not be so limited.

Note that in the figure reference numeral 110 identifies a site, at which the sets of antennas are allocated. The depicted antenna mast shall symbolize the antenna site for illustration purposes only. The antennas located at the site are not depicted, only the sectors defined by radiation of the antennas. In addition to the antennas a plurality of other network processing elements may be located at the site, particularly for processing information and signals to be sent and received via the antennas. In one embodiment the network processing elements may comprise base stations or eNodeBs.

At the antenna site a first set of a plurality of at least two directed antennas is arranged, wherein each of the plurality of sectors 120a-120c of the cell is covered by at least one antenna. Said first antenna set may be operated by a first operator, e.g. a mobile network provider, and may use a first frequency band, which typically is assigned to the first operator. In the figure elements 120a-120c shall roughly illustrate the area covered by the radiation of the respective antennas. Due to the nature of electromagnetic radiation, the area of a sector covered by an antenna does not exhibit exact borderlines, since the radiation, i.e. the strength of the electrical field, decreases at the edges of a sector but does not come to a sudden stop. For that reason the geographical illustration of a sector can be a rough estimate only.

The first set of antennas comprises at least two directed antennas. Each of the sectors is served by at least one antenna, the total of the sectors form the coverage area of the cell. As depicted in the figure the antennas, i.e. the sectors covered by the antennas, are typically arranged with some overlap to ensure coverage and to allow a seamless handover from one sector to an adjacent sector.

In addition to the antennas at least one first baseband processing block is arranged at the antenna site. The first baseband processing block is communicatively coupled to at least one antenna and is adapted and configured to process signals received from mobile terminals 130 via the antennas. Said baseband processing block furthermore is adapted and configured to process information to be sent downlink via the antennas to a mobile terminal. In one embodiment all antennas of the first antenna set are coupled to the baseband processing block, and the block may be further adapted and configured for cancelling inter-sector interference. In this way the first baseband processing block may be adapted and configured for jointly processing all signals received and transmitted via the antennas communicatively coupled to the block. Furthermore, said baseband processing block may be adapted and configured for processing signals received and transmitted via the antennas communicatively coupled to the block jointly with signals received and transmitted via the antennas communicatively coupled to at least one other baseband processing block.

A mobile terminal 130 may be communicatively coupled to the communication system when the terminal can receive and transmit radio signals to and from the communication system via at least one of the antennas, i.e. the terminal must be located within at least one sector 120. Accordingly the terminal may communicate via the antenna as long as uplink signals can be successfully decoded at the base station and downlink signals can be successfully decoded at the terminal. Link quality may be sufficiently good as long as the terminal is located somewhere in the sector where signal strength is strong. As explicated above said communication may be impacted for example by decreasing signal strength at the edges of a sector. Weak signals may result in a low link quality, which in turn may result in slower and erroneous transmissions and connection loss.

In addition to the first set of antennas arranged at the antenna site a second set of antennas is arranged at said antenna site, wherein said second set of antennas comprises a plurality of at least two antennas. In conventional architectures the second antenna set may be operated by a second operator, e.g. a second mobile network provider. When operated in stand-alone mode, i.e. without any influence or relation to the first set of antennas, a second frequency band assigned to the second operator is typically used. Typically the frequency bands used by two network providers operating in the same cell do not overlap in frequency to ensure that signals transmitted in one frequency band do not interfere with signals transmitted in the other frequency band. The plurality of antennas of the second set are arranged that the sectors at least partially cover the area covered by the first set of antennas. At least one sector of the second set of antennas partially covers a sector of the first set of antennas, i.e. at least one sector of the second set of antennas overlaps a sector of the first set of antennas.

The antennas of the second set may exhibit identical or nearly identical physical properties as the antennas of the first set of antennas. However, similar antenna characteristics as e.g. similar half-power beamwidths are not a necessity. In particular the antennas are capable of being operated in the first frequency band besides being operated in the second frequency band.

Sectors of one antenna set are not delimited by strict borderlines but may overlap, radio signal strength decreases at the edges of a sector 140a - 140c and the total of sectors 140a - 140c may cover the area of a cell. Without limiting the invention the cell as defined by the total of sectors 140 may be essentially identical to the cell as defined by the sectors 120a - 120c of the first set of antennas, i.e. the first and second antenna set at least partially serve the same cell.

Furthermore a second baseband processing block may be arranged at the antenna site, wherein said second baseband processing block is adapted and configured to essentially exhibit the properties described above for the first baseband processing block. Said second baseband processing block is adapted and configured to be connectable to the second set of antennas.

To mitigate the effects of weak and/or interfered signals when a terminal 130 is communicatively coupled to the communication system via only at least one antenna of one sector, i.e. one antenna of the first set of antennas, at least one antenna of a sector of the second set of antennas, namely of a sector covering the location of the terminal, can be communicatively coupled to the first baseband processing block in addition to the antennas of the first antenna set. Considering that the first antenna set may be operated by a first provider and the second antenna set may be operated by a second provider, the at least one antenna of the second set of antennas is then shared by the two providers. That is at least the antenna of sector 140b, which covers the location of terminal 130, can be communicatively coupled to the first baseband processing block in addition to the antenna covering sector 120a, which also covers the location of terminal 130. Said coupling can be performed by using a switch that connects the at least one antenna of the sector of the second antenna set to the baseband processing block coupled to the first antenna set. Said antenna of the second antenna set is then operated at the frequency band of the first antenna set to enable communication with terminal 130.

The first baseband processing block is adapted and configured to transmit signals to and receive signals from the terminal via at least two antennas, i.e. via the antennas of the sector of the first set of antennas and additionally via the at least one antenna of the sector of the second set of antennas. That is the first baseband processing block is adapted and configured to perform a so-called coordinated multi point technique (CoMP), wherein the information is transmitted to the terminal 130 via at least two antennas, i.e. the at least two antennas can be applied for joint transmission in the downlink. The first baseband processing block is furthermore adapted and configured for using the at least two antennas for joint detection and processing in the uplink. In this way the antennas can perform a coordinated multi-point transmission and a coordinated multi-point reception respectively.

In one embodiment the terminal may be communicatively coupled via an antenna of the first set of antennas to the first baseband processing block. The terminal may communicate via the antenna of the first set of antennas only as long as the channel conditions are sufficiently good. While the connection is established the communication system may detect deteriorated channel conditions. The detection of poor channel conditions may be performed at the beginning of the communication, when either the terminal or the baseband processing block initiates a payload data exchange, or during ongoing up- and downlink transmissions and may trigger the method step of connecting at least one antenna of the second set of antennas to the first baseband processing block for using that antenna to improve transmissions to and from the terminal. Note that then the at least one antenna is operated in the first frequency band. Then signals transmitted by the terminal, i.e. uplink, are not only received by the antenna of the first antenna set, but also by the antenna of the second antenna set. Signals received from the terminal at the antenna of the second antenna set are passed to the baseband processing block for joint processing with the signals received by the antenna of the first antenna set, thus improving the uplink connection. Similarly signals transmitted downlink, i.e. to the terminal, can be transmitted from the baseband processing block via the two coupled antennas, i.e. via the antenna of first antenna set only or via the antenna of the second antenna set only or via both antennas simultaneously, to the terminal. In this way communication to and from the terminal can be improved by dynamically coupling at least one antenna of the second antenna set to the first baseband processing block.

In addition to operating the antenna of the second antenna set in the first frequency band, the antenna may be operated in the second frequency band at the same time, thus enabling communication in both frequency bands. Said antenna may accordingly be used by both operators, i.e. at least that antenna may be shared. To enable communication within the first and second frequency band the antenna may be coupled to the first baseband processing block and in addition to the second baseband processing block, when the first baseband processing block is adapted and configured to process signals of the first frequency band and the second baseband processing block is adapted and configured to process signals of the second frequency band. Filtering of the signals received by that antenna for isolating signals of the first and second frequency band may be performed in each of the baseband processing blocks connected to the antenna.

In one embodiment all antennas of the second antenna set may be coupled to the first baseband processing block in addition to the first set of antennas.

The antennas of the second set then are operated in the first frequency band to support communication in the first frequency band. Optionally and in addition to being operated in the first frequency band, the antennas of the second set may be operated in the second frequency band and may be coupled to the second baseband processing block. Signals received by the antennas of the second set may be separated according to frequency bands in the baseband processing blocks. Antennas of the second set in this way may shared by the first and second operator, wherein each operator uses its respective frequency band, and wherein the first operator may transmit its signals via both sets of antennas.

Further optionally also the antennas of the first set can be operated in the second frequency band while at the same time being operated in the first frequency band, i.e. all antennas of the first and second antenna set can be operated simultaneously in the first and the second frequency band. Signals received by the antennas can be fed into only one or both the first and the second baseband processing block, where the signals optionally may be separated by frequency.

The at least one antenna of the second set of antennas, which currently is coupled to the first baseband processing block, may be disconnected from the first baseband processing block. When that antenna is disconnected from the first baseband processing block it is no longer operated in the first frequency band. The disconnected antenna may then be connected to another, e.g. the second, baseband processing block.

In this way at least one antenna of the second antenna set may be connected to and disconnected from the first baseband processing block to enable - at least temporarily - joint processing of signals by at least one antenna of the first antenna set and the antenna of the second antenna set.

The invention is not limited to the depicted first and second set of antennas. Further sets of antennas may be arranged at the antenna site. Antennas of the further sets may be operated similarly as described above for the second set of antennas.

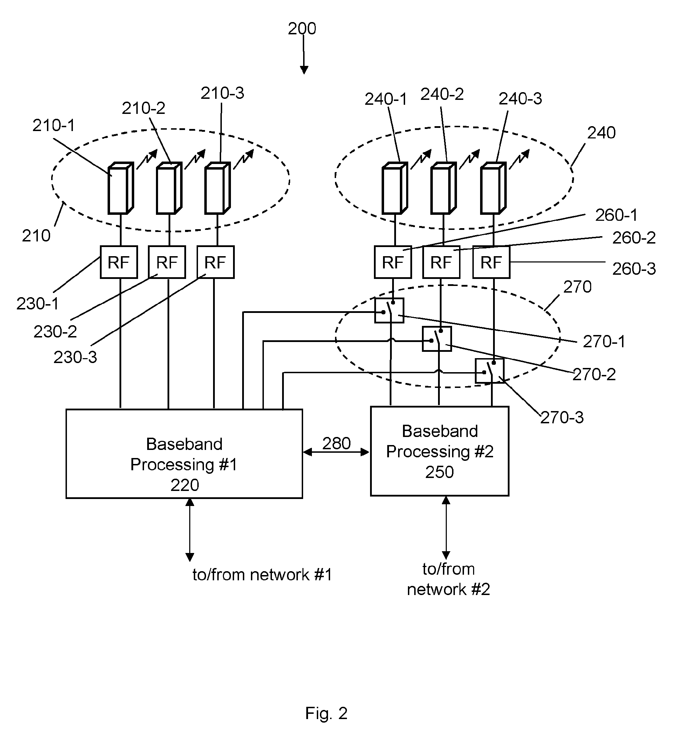

Figure 2 depicts a schematic of an arrangement 200 of antennas and baseband processing blocks at an antenna site.

A first set of antennas 210 comprising antennas 210-1 to 210-3 is arranged at the antenna site, wherein the antennas are arranged as described above with respect to figure 1. Each of the antennas 210-1 to 210-3 is coupled to a first baseband processing block 220, wherein said coupling of an antenna to the baseband processing block may comprise an optional RF processing block 230-1 to 230-3. An RF processing block is at least adapted to amplify uplink and downlink signals that are received/transmitted via the respective coupled antenna. An RF processing block accordingly may comprise power amplifiers, duplexers and filters. Note that RF processing block may form an integral part of a so-called remote radio head or an active antenna.

First baseband processing block 220 is adapted and configured to process the signals received via the first set of antennas, and to forward the processed received signals to a first network. Said block is furthermore adapted and configured to process downlink signals, i.e. signals passed from the first network to block 220, which in turn forwards the downlink signals for transmission to at least one of the coupled antennas. The first set of antennas, first baseband processing block may be operated by a first operator, i.e. a first network provider using a first frequency band in the cell.

Similarly second antenna set 240 comprising antennas 240-1 to 240-3 is arranged at the antenna site as described above with respect to fig. 1. Each of the antennas 240-1 to 240-3 may be coupled to a second baseband processing block 250, wherein each coupling may optionally comprise an RF processing block 260-1 - 260-3. Baseband processing block 250 is at least adapted and configured to process downlink and uplink signals transmitted/received via at least one antenna of the second antenna set 240. Optionally the second baseband processing block may be adapted and configured for separating received signals by frequency, i.e. to separate signals of the second frequency band from signals of the first frequency band.

Antennas of the second set 240 can be de-coupled from second baseband processing block 250, can be coupled to the first baseband processing block 220 and can be coupled to both the first and second baseband processing block at the same time. As a means of coupling and de-coupling an antenna to block 220 or block 250 a set of switches 270 may be arranged in the connections to the antennas of the second antenna set 240. Depending on the setting of a switch 270-1 to 270-3 each antenna of the second antenna set can be coupled to second baseband processing block 250 or to first baseband processing block 220 or to both baseband processing blocks.

The setting of a switch 270-1 to 270-3 may be controlled by the first baseband processing block 220. The connection from a switch 270 to block 220 accordingly is adapted and configured to pass uplink/downlink signals from/to an antenna 240-1 to 240-3 and furthermore for controlling the setting of a switch.

First baseband processing block is furthermore communicatively coupled to second baseband processing block in order to arrange, whether a switch connects an antenna of the second antenna set 240 to the second baseband processing block or to the first baseband processing block or to both processing blocks. This coupling between the two baseband processing blocks is illustrated by connection 280.

If a mobile terminal communicates via one of the antennas of the first antenna set 210, and the connection to the mobile terminal could be improved by transmitting/receiving signals to/from said terminal via at least one antenna of the second antenna set in addition to transmitting/receiving via at least one antenna of the first antenna set, the first baseband processing block may arrange with the second baseband processing block that at least one antenna of a sector of the antennas of the second set is coupled to the first baseband processing block.

Prior to controlling a switch 270-1 to 270-3 to change its setting for coupling an antenna of the second antenna set to the first baseband processing block, first baseband processing block 220 may check with the second baseband processing block, if a redirection of the antenna signals of a second set antenna is possible with respect to the operation of the second baseband processing block. The baseband processing blocks may arrange that an antenna may be connected to both the first and the second baseband processing block.

In one embodiment the communication to the mobile terminal can be improved by deploying an antenna of the second antenna set, if channel conditions from the terminal to the antenna of the first set are poor. Poor channel conditions may occur when the terminal is located at an edge of a sector of the first antenna set or if the channel is interfered by other transmitters or if the transmitter is subject to shadowing. In an alternative embodiment at least one antenna of a sector of the second antenna set can be coupled to the first baseband processing block, if an antenna of the first antenna set is unusable, i.e. for example if an antenna is defect or shutdown due to maintenance operations. In still another embodiment the first baseband processing block may decide to connect to an antenna of the second set of antennas if there are too many terminals in a sector.

Note that the invention may not be restricted to embodiments wherein a cell consists of three sectors. In an alternative embodiment the number of antennas of the first set of antennas differs from the number of antennas comprised in the second set of antennas. More generally the invention may not be restricted by constraining the number of antennas to a particular number. In particular a higher number of antennas and a corresponding higher number of sectors may be advantageous, since a finer granularity of cell, i.e. a higher number of sectors, i.e. a high-order sectorization, is advantageous. Sectors of antennas may differ according to the number of deployed antennas. It is noted that two sectors of different size and/or different shape can be used for improving the connection to a mobile terminal, as long as each of the antennas may successfully transmit to and receive from said terminal.

In this way antennas of a first and a second antenna set, which each can be operated separately, e.g. by a first and second provider, can be advantageously connected to improve communication in areas covered by at least one antenna of the first set and at least one antenna of the second set by using the transmit and receive diversity provided by the antennas connected to the first baseband processing block.

The receive diversity in particular may be exploited by jointly processing the signals received by the antennas. Backhaul constraints as known from locally distributed and cooperating antenna systems are negligible, since the antennas are located at the same antenna site.

In one embodiment a successive interference cancellation method can be performed when jointly processing the signals of a terminal received by at least two antennas, wherein basically interfering signals of different sectors are cancelled by successively subtracting them. Properties of the transmission channel are estimated and taken into account in a tentative decision on data symbols to regenerate receive and transmit symbols. These signals of interfering transmissions are subtracted from a received, first signal, thus minimizing the squared Euclidian distance between the received signal and the sum of all user signals, i.e. the totally transmitted signal. Thus, the probability of a correct regeneration of the first data symbol by applying the estimated channel increases. The subsequent subtraction of the interference caused by this regenerated data symbol from the second received data symbol then increases the probability of a correct decision of the second symbol as well. This process of subtracting regenerated signals from received signals can be repeated multiple times thus cancelling interference. Said method is described in more detail for example in "Multiuser detection", by S. Verdú, published in 1998 by Cambridge University Press. The performance of successive interference cancelation depends strongly on the order of detection. To capture the potential, the strongest interferers need to be cancelled first. Due to the directions of the boresights of the at least one antenna of each sector, the strongest interferers typically originate from neighbouring sectors. Thereby, neighbouring sectors refers to co-located sectors with the shortest angular distance between their antenna boresight and the antenna boresight of the respective sector. Hence, the interference level typically decreases with increasing angular distances. Thus, successive interference cancelation may exploit the typical interference structure.

In an alternative embodiment a parallel interference cancellation may be performed in the step of jointly processing the signals, wherein channels to all users are estimated at the same time, symbols transmitted by all users are estimated at the same time, symbols of all users are regenerated taking the estimated channel properties into account and the regenerated symbols then are subtracted from each other simultaneously thus cancelling interference from all users at the same time, i.e. parallel. This approach is more closely described for example in "Improved Parallel Interference Cancellation for CDMA, by D. Divsalar et al, IEEE transactions on communications Vol 46 no 2, Feb. 1998. Due to the directions of the boresights of the at least one antenna of each sector, the strongest interferers typically originate from neighbouring sectors. Thereby, neighbouring sectors refers to co-located sectors with the shortest angular distance between their antenna boresight and the antenna boresight of the respective sector. Hence, the interference level typically decreases with increasing angular distances. By applying parallel interference cancelation, the interferers of sectors with similar angular distance may be cancelled jointly. Thereby, the antenna setup will typically allow improving the performance with less iterations than in other application scenarios.

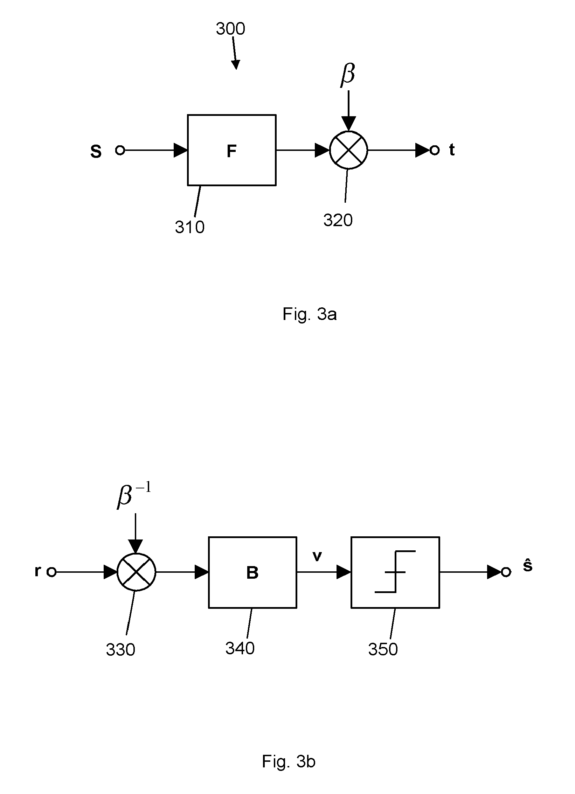

Figures 3a, 3b depict schematics of processing blocks of the baseband processing, wherein fig. 3a depicts the processing chain 300 at the transmitter side and fig. 3b depicts the baseband processing chain at the receiver side.

In fig 3a the vector of data symbols is denoted s, which is input to preprocessing block 310. Preprocessing block 310 pre-processes the vector by applying a preprocessing matrix F on the vector. If no preprocessing is performed as e.g. in the uplink at the terminal side, matrix F is an identity matrix.

Preprocessing matrix F is determined based on channel knowledge. Symbols to be transmitted may be preprocessed by applying matrix F, i.e. pre-distorted, in order to compensate for any estimated or measured channel distortions. Estimated channel coefficients can be derived for example by so-called channel reciprocity, i.e. in time division duplex systems uplink channel coefficients estimated from uplink symbols.

In one embodiment preprocessing in block 310 is conducted by linear transformation as

$$ F = H^H \left( HH^H + \Phi_{zz} \right)^{-1} $$

wherein H denotes the channel matrix and $\Phi_{zz}$ denotes the covariance matrix of noise and interference. Applying a Wiener filter is a good trade-off between desired interference cancellation and undesired noise enhancement.

Alternatively a non-linear preprocessing, in one embodiment a Tomlinson-Harashima preprocessing, can be performed.

Subsequent to the preprocessing in block 310, the preprocessed vector is scaled, i.e. power scaled, by applying a scaling factor $\beta$ in multiplier block 320 to the preprocessed vector to produce a preprocessed scaled vector t, wherein preprocessed scaled vector t exhibits the same power level as vector s. Thus it is ensured, that the preprocessing neither amplifies nor attenuates the data vector s. If no preprocessing is performed, as e.g. in the uplink at the terminal side, the scaling factor $\beta$ equals one.

Figure 3b depicts the baseband processing of a received symbol r, or received vector r, at the receiver, i.e. at the base station side in the uplink or the terminal side in the downlink. The received vector r can be described as

$$ r = HT + \overline{H}\,\overline{T} + n $$

wherein H denotes the channel matrix from all coordinated transmit antennas at the antenna site to the single antenna or multiple antennas of the receiving mobile terminal and the channel matrix from the single antenna or multiple antennas of the transmitting mobile terminal to all coordinated received antennas of the antenna site in the downlink and uplink, respectively. $\overline{H}$ denotes the channel matrix of the channel of all interfering transmissions, $\bar{t}$ denotes the interfering transmit vector and n denotes the noise vector comprised in the receive vector r.

At the receiver the receive vector r is power scaled by applying a factor of $\beta^{-1}$ in a multiplier 330 to receive vector r to adapt the power level of the received vector to an adequate power level for further processing.

Subsequent to scaling the receive vector r a postprocessing can be performed in postprocessing block 340 by applying matrix B to scaled receive vector r to produce a scaled and postprocessed vector v. Said postprocessing in one example for the uplink may be performed by applying a Wiener filter

$$ B = H^H \left( HH^H + \Phi_{zz} \right)^{-1} $$

wherein H denotes the channel matrix from all antennas of the terminal to all coordinated antennas at the antenna site and $\Phi_{zz}$ denotes the covariance matrix of noise and interference at the terminal.

In one example for the downlink, no postprocessing is performed at the terminal side and thus the matrix B equals an identity matrix.

Scaled and postprocessed receive vector v is then passed to detector block 350. Based on the scaled and postprocessed receive vector v detector 350 estimates an estimated data symbol vector $\hat{s}$, which should match data symbol vector s. In this way a data symbol vector can be transmitted downlink from an antenna site to a mobile station and uplink from a mobile station to an antenna site.

The proposed method and corresponding system can be used to implement a coordinated multipoint system exhibiting high sectorization, wherein a first and second antenna sets operated by a first and second network provider respectively are used without replacing the existing antennas. The system and method proposed accordingly may be implemented based on existing hardware, particularly reusing the antenna sets. Also the baseband processing blocks can be adapted and configured for the joint processing of signals received from the additional antenna of the second set.

Claims

1.  A communication system comprising at least one antenna site,
    at which a first set of a number of N antennas is arranged, N >= 2, each of a plurality of a first set of N sectors being covered by at least one antenna of the first set of antennas, and
    wherein at the at least one antenna site (200) a second set of a number of M antennas, M >= 2, is arranged, each of a plurality of a second set of M sectors being covered by at least one antenna of the second set of antennas, and
    wherein the total of the second set of M sectors at least partially covers the same coverage area as the total of the first set of N sectors, and
    wherein each antenna of the first set of N sectors is communicatively coupled to a first baseband processing block, and
    wherein at least one antenna of the second set is connectable via a switch to said first baseband processing block.

2.  The communication system of claim 1 wherein at least one of the second set of M sectors overlaps a sector border of one first set of N sectors.

3.  The communication system of any preceding claim wherein each of the second set of sectors at least partially covers two adjacent sectors of the first set of sectors.

4.  The communication system of any preceding claim wherein N = M.

5.  The communication system of any preceding claim wherein the antennas of the first and second set of antennas are adapted and configured to operate in the same frequency bands.

6.  The communication system of any preceding claim comprising a second baseband processing block connectable via a switch to at least the second set of antennas.

7.  The communication system of claim 6 wherein the switch is configured and adapted to connect the at least one antenna of the second set to either the first or the second baseband processing block or to both processing blocks.

8.  Method for processing a signal received in a communication system comprising at least one antenna site, at which a first set of a number of N antennas is arranged, N >=2, each of a plurality of N sectors being covered by one antenna of the first set of antennas, and wherein at the at least one antenna site a second set of a number of M antennas, M >= 2, is arranged, each of a plurality of a second set of M sectors being covered by one antenna of the second set of antennas, and
    wherein the total of the second set of M sectors at least partially covers the same coverage area as the total of the first set of N sectors, and
    wherein each antenna of the first set of N sectors is communicatively coupled to a baseband processing block, and
    wherein at least one antenna of the second set is connectable via a switch to said baseband processing block,
    the method comprising the steps of
    connecting the at least one antenna of the second set to said baseband processing block, and
    receiving said signal via at least one antenna of the first set and via the at least one antenna of the second set, and
    jointly processing the first and second antenna signals in said baseband processing block.

9.  The method of claim 8 wherein at least one of the second set of M sectors overlaps a sector border of one of the first set of N sectors.

10. The method of any preceding claim 8 to 9 wherein each of the second set of sectors at least partially covers two adjacent sectors of the first set of sectors.

11. The method of any preceding claim 8 to 10 wherein N = M.

12. The method of any preceding claim 8 to 11 wherein the antennas of the first and second set of antennas are adapted and configured to operate at the same frequency band.

13. The method of any preceding claim 8 to 12 wherein the step of connecting the at least one antenna of the second set to said baseband processing block is performed while a connection of that antenna to a second baseband processing block is maintained.

14. The method of any preceding claim 8 to 12 further comprising the step of disconnecting the at least one antenna of the second set from a second baseband processing block.

15. The method of any preceding claim 8 to 13 wherein the step of jointly processing the first and second antenna signals in said baseband processing block comprises one of successive interference cancellation or parallel interference cancellation.

16. The method of any preceding claim 8 to 15 wherein the antennas of the first and second set of antennas are adapted and configured to operate jointly at the frequency band of the first antenna set and to simultaneously operate jointly at the frequency band of the second antenna set.

Fig. 1

Fig. 2

300

β

S ○ ——→ **F** ——→ ⊗ ——→○ t

310          320

Fig. 3a

β⁻¹

r ○ ——→ ⊗ ——→ **B** —v→ ⌐ ——→○ ŝ

330          340          350

Fig. 3b

Europäisches
Patentamt

European
Patent Office

Office européen
des brevets

## EUROPEAN SEARCH REPORT

**Application Number**

EP 11 17 6063

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 099 695 B1 (NGAN JOHN [US]) 29 August 2006 (2006-08-29) * column 6, line 26 - line 47; figure 3 * * column 10, line 24 - column 11, line 35 * ----- | 1-16 | INV. H04W88/08 ADD. H04W16/24 |
| A | EP 1 199 816 A1 (NEC CORP [JP]) 24 April 2002 (2002-04-24) * the whole document * ----- | 1-16 | |
| A | US 7 415 288 B1 (HOU JASON [US] ET AL) 19 August 2008 (2008-08-19) * column 7, line 6 - line 36; figure 3 * ----- | 1-16 | |
| | | | TECHNICAL FIELDS SEARCHED (IPC) H04W |

The present search report has been drawn up for all claims

| Place of search | Date of completion of the search | Examiner |
|---|---|---|
| The Hague | 8 December 2011 | Schut, Gerhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.** EP 11 17 6063

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2011

| Patent document cited in search report | | Publication date | Patent family member(s) | | Publication date |
|---|---|---|---|---|---|
| US 7099695 | B1 | 29-08-2006 | US 7099695 B1 | | 29-08-2006 |
| | | | US 7853294 B1 | | 14-12-2010 |
| EP 1199816 | A1 | 24-04-2002 | AU 5847700 A | | 22-01-2001 |
| | | | BR 0012358 A | | 23-07-2002 |
| | | | CN 1372726 A | | 02-10-2002 |
| | | | EP 1199816 A1 | | 24-04-2002 |
| | | | JP 3736211 B2 | | 18-01-2006 |
| | | | JP 2001024569 A | | 26-01-2001 |
| | | | WO 0103331 A1 | | 11-01-2001 |
| US 7415288 | B1 | 19-08-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. RIEDEL et al.** *Creating Desirable Interference by Optimized Sectorization in Cellular Systems,* December 2010
- **S. VERDÚ.** Multiuser detection. Cambridge University Press, 1998

- **D. DIVSALAR et al.** Improved Parallel Interference Cancellation for CDMA. *IEEE transactions on communications,* February 1998, vol. 46 (2